(19) Europäisches Patentamt
European Patent Office
Office européen des brevets

(11) Publication number: 0 122 676 A1

# (12) EUROPEAN PATENT APPLICATION

(21) Application number: 84200511.8

(51) Int. Cl.³: C 07 F 9/10

(22) Date of filing: 10.04.84

(30) Priority: 15.04.83 DE 3313759

(43) Date of publication of application: 24.10.84 Bulletin 84/43

(84) Designated Contracting States: AT BE CH DE FR GB IT LI NL SE

(71) Applicant: UNILEVER NV
Burgemeester s'Jacobplein 1 P.O. Box 760
NL-3000 DK Rotterdam(NL)

(84) Designated Contracting States:
BE CH DE FR IT LI NL SE AT

(71) Applicant: UNILEVER PLC
Unilever House Blackfriars P O Box 68
London EC4P 4BQ(GB)

(84) Designated Contracting States:
GB

(72) Inventor: Todt, Klaus Hinrich
Achter de Höf 21
D-2000 Hamburg 56(DE)

(74) Representative: Dries, Antonius Johannes Maria et al,
Unilever N.V. Patent Division P.O. Box 137
NL-3130 AC Vlaardingen(NL)

**(54) Process for the quaternization of cephalin and N-derivatives thereof.**

(57) A process is provided for the quaternization of cephalin and N-derivatives thereof, wherein the conversion is carried out with methyl chloride as methylating agent, in the presence of a base. Preferably sodium and/or potassium carbonate is used as base. The process can suitably be carried out at 40-80°C in an autoclave, using ethanol as a solvent.

EP 0 122 676 A1

# Process for the quaternization of cephalin and N-derivatives thereof

The invention relates to a process for the quaternization of phosphatidyl oxyethylamine and N-derivatives thereof by conversion with methyl halogenide.

Phosphatides of animal and vegetable origin contain, besides N-free phosphatides and alpha- and bèta-phosphatidic acids (fatty acid esters of 1- or 2-glyceryl phosphoric acids of the formulas

| | | |
|---|---|---|
| $CH_2O-CO-R^1$<br>$\vert$<br>$CHO-CO-R^2$<br>$\vert$<br>$CH_2O-PO(OH)_2$ | and | $CH_2O-CO-R^1$<br>$\vert$<br>$CHO-PO(OH)_2$<br>$\vert$<br>$CH_2O-CO-R^2$ |
| Alpha | | Bèta |

in which $-CO-R^1$ and $-CO-R^2$ are fatty acid radicals), esters of the phosphatidic acids with (a) aminoethanol, (b) 1-amino-2-hydroxy ethanoic acids (serine) and (c) 2-hydroxyethyl trimethyl ammonium chloride (choline) of the following formulas (in which only the alpha-formulas are given):

(a) Phosphatidyl oxyethylamine (cephalin)

$CH_2O-CO-R^1$
$|$
$CHO-CO-R^2$
$|$
$CH_2O-PO(OH)-OCH_2-CH_2-NH_2$

(b) Phosphatidyl serine (serine cephalin)

$CH_2O-CO-R^1$
$|$
$CHO-CO-R^2$
$|$
$CH_2O-PO(OH)-OCH_2-CHNH_2-COOH$

(c) Phosphatidyl choline (lecithin)

$CH_2O-CO-R^1$
$|$
$CHO-CO-R^2$
$|$
$CH_2O-PO(OH)-OCH_2-CH_2-N(CH_3)_3Cl$

or

$$CH_2O\text{-}CO\text{-}R^1$$
$$CHO\text{-}CO\text{-}R^2$$
$$CH_2O\text{-}PO(O^-)\text{-}OCH_2\text{-}CH_2\text{-}N(CH_3)_3^+.$$

Besides, there are also so-called lysophosphatides, of which one of the two fatty acid radicals is lacking.

The commercially available phosphatide products are mixtures of such phosphatides and contain moreover accompanying substances, such as glycerides, sterols and esters thereof.

When using phosphatide mixtures, e.g. as emulsifiers for oil-in-water emulsions, which are used therapeutically, in foodstuffs or for dietetic purposes, it is important that the cephalin content should be low.

In the patent and other literature there has been no lack of proposals for separating the various phosphatides by chromatographic separation methods, solvent fractionation or chemical processes.

It is advantageous that before separation the lecithin content should be as high as possible. On the other hand, in the manufacture of enriched lecithin fractions from phosphatide mixtures also impoverished fractions, enriched in cephalin, are obtained, for which a market should be found.

The lecithin content of phosphatide mixtures can be increased by conversion of the cephalin present therein into lecithin. The mixtures thus obtained can be used as such or as starting material for fractionation.

By conversion of the cephalin, obtained in the impoverished fractions of the phosphatide separation, into lecithin, an increased amount of lecithin can be obtained.

In US 2 373 686 it is proposed to convert cephalin and cephalin-containing mixtures, such as oil-free soy-bean phosphatides, in ether solution with diazomethane or with methanal and methanoic acid+). However, probably only dimethyl cephalins will be formed.

This is confirmed in DE 22 26 291 and also in the corresponding US 3 862 968, according to which the methylation of cephalin and serine cephalin is carried out in two steps: In the first step, by conversion with methanal and methanoic acid, the corresponding dimethyl compounds are obtained, which are quaternized with methyl iodide in the second step.

Verkade, Proc. Kon. Acad. Wetenschappen B65, 164-165 (1962) describes o-benzyl dimethyl cephalin which has been methylated with methyl iodide. Slotboom et al. (cf. Chem. Phys. Lipids 1, 317-336, (1967)), carried out the methylation of o-benzyl dimethyl lysocephalin with methyl iodide in the presence of cyclohexylamine, from which lysolecithin was prepared. Stoffel et al. (cf. Hoppe-Seyler's Z. physiol. Chem. 352, 1058-1064 (1971)) described the methylation of dimethyl cephalins with labelled methyl iodide. Smith et al. (cf. Lipids 13, 92-94 (1978)) methylated a certain cephalin into the corresponding lecithin with labelled methyl iodide in the presence of silver carbonate in tetrahydrofuran and acetonitrile, with a yield of 75%. Patel et al. (cf. Lipids 14, 596-597 (1980)) methylated cephalin from egg to lecithin with labelled methyl iodide in the presence of symmetric hexaoxacyclo-octadecane and anhydrous potassium carbonate in benzene, also with a yield of about 75%. Without citing any literature

+) formic acid

it is asserted in the above patent specifications that there is only very incomplete methylation when cephalin is methylated with the aid of methyl iodide.

It has now been found that conversion of cephalin into lecithin can simply occur by exhaustive methylation. The exhaustive methylation of ammonia and amines for the preparation of quaternary ammonium compounds is a process, which has been known for a long time. However, as appears from the literature mentioned, the situation with the phosphatides is not so simple as with the amines, which only carry hydrocarbon radicals.

Smith el al. (loc. cit.) used the expensive silver carbonate for the methylation of cephalin with methyl iodide and as solvent tetrahydrofuran and acetonitrile. Patel et al. (loc. cit.) used benzene. Such solvents must be removed completely if the products are to be used in foodstuffs or therapeutic products. When using methyl iodide also the iodide ion is incorporated in the product and this is generally not desirable.

As appeared from tests, methylation is also possible with the very poisonous dimethyl sulphate, in which however, besides the desired quaternization product, the presence of its methyl ester was observed, which is to be dissociated, e.g. by boiling with a sodium iodide solution in acetone.

The afore-mentioned methylating agents are also less suitable because of their toxicity and their expensiveness. Moreover, it is not easy to remove any remaining methylating agent from the reaction product.

In this specification by phosphatidyl oxyethylamine (PE) or cephalin is meant both cephalin and serine cephalin as well as the lyso-derivatives of these compounds and other derivatives in which one or both of the fatty acid residues have been replaced or modified, unless indicated otherwise. Similarly the indication phosphatidyl choline (PC) or lecithin is meant to include the corresponding quaternized compounds.

It was surprisingly found that quaternization according to the invention of cephalin in a nearly pure condition and in cephalin-containing mixtures with methyl chloride is an advantageous and technically well feasible method.

Therefore, in accordance with the invention a process is provided for the preparation of quaternized phosphatidyl oxyethylamine and N-derivatives thereof with methyl halogenide as methylating agent, characterized in that phosphatidyl oxyethylamine and/or an N-derivative thereof is converted with methyl chloride in the presence of a base. Preferably the reaction is carried out in the presence of a solvent.

Phosphatides from animal products, such as egg or brain, or from phosphatides obtained in the desliming of vegetable crude oils can for example be used as starting material. Treated phosphatides, such as de-sugared and/or de-fatted phosphatide or enriched or impoverished fractions can also be used as starting material. Both lysocephalin and already partially methylated phosphatides, such as dimethyl cephalin, can be also be quaternized according to the process of the invention.

Methyl chloride at room temperature is a gas which, concentrated to a colourless liquid, is marketed in steel bottles. Its boiling point is -23.7°C. The gas has an ethereal, non irritating smell. Methyl chloride is comparatively cheap.

The conversion can suitably be carried out in a stirred autoclave, for example in the following way: The phosphatide or a phosphatide-containing mixture is fed into the autoclave and the necessary amount of a base and preferably a solvent is added. The autoclave is closed and liquid methyl chloride is poured in via a pressure pipe. The amount of methyl chloride used is determined by weighing the storage vessel. The temperature of the reaction mixture is raised to 40-80°C and the reaction mixture is stirred for 3-100 hours, during which the pressure rises to about 20 $kg/cm^2$. After the reaction has been completed, the pressure is reduced carefully to avoid overfoaming of the reaction composition.

A base should be added to bind the releasing hydrogen chloride. Alkali hydroxides can be used. However, as the use of these bases may cause hydrolysis of the phosphatides, the use of alkali carbonates is preferred. The hydrogen carbonates are less suitable as no conversion is observed at temperatures of about 50°C. When alkali carbonates are used, lower temperatures can suitably be applied. Both sodium carbonate and potassium carbonate are very suitable. The bases are preferably added in an aqueous solution, and more preferably in a concentrated solution, to facilitate subsequent drying. As the base is partially converted into chloride, the pH-value of the mixture decreases during the reaction. It is believed that after conversion of carbonate into hydrogen carbonate, the pH is decreased in such a way that there is no further or only an incomplete binding of the hydrogen chloride.

Although acid-binding agents, such as magnesium oxide, calcium hydroxide, magnesium carbonate and calcium carbonate should essentially be effective, they are not preferred because of their insolubility in water (they would increase the reaction times and it might be questionable whether there would be a proper distribution in the reaction mass) and, moreover, the presence of magnesium and calcium ions is not desirable for many applications.

A solvent is not absolutely necessary for conversion. When, however, the starting material is solid or highly viscous, it is preferable to add a solvent. Any solvent which, together with the starting material, yields a flowable liquid, can be used. In doing so, it is not necessary for the phosphatides to be completely dissolved. Suitable solvents are glycerides, hydrocarbons, chlorinated hydrocarbons, ethers and alcohols. Ethanol is preferred, as this may already be present in many phosphatides because of previous processes and, moreover, is subsequently easily removable without detrimental effects occurring when there is no complete removal. The presence of ethanol (and water of the basic solution) also decreases the risk of the hydroxyl groups of the phosphatides being methylated by the methyl chloride.

For the conversion of cephalin into lecithin in theory 3 Mol of methyl chloride per Mol of cephalin is needed. Cephalin (from soy-bean phosphatide) has an average molecular weight of 765. Thus, theoretically speaking, per kg of cephalin about 0.2 kg of methyl chloride should be added, whereby about 0.05 kg of hydrogen chloride is formed as by-product. Per Mol of HCl 1 Mol of base should be added; this means that, theoretically speaking, about 3 Mol of base per Mol of cephalin, corresponding to about 0.16 kg of NaOH, 0.22 kg of KOH, 0.42 kg of $Na_2CO_3$ or 0.54 kg of $K_2CO_3$ per kg of cephalin should be added.

In practice, however, excess of methyl chloride will be used, which, however, is kept as small as possible, as at the end of the conversion the superfluous methyl

chloride should be discharged from the autoclave and should be collected for environmental reasons. In practice also the smallest possible excess of base will be used, in which the complete binding of the hydrogen chloride and the desired pH-value at the end of the reaction play a part. If only partial conversion of cephalin into lecithin is desired, smaller amounts of methyl chloride and base can be used.

The required amounts depend on the amount of cephalin in the phosphatide mixture, which is to be converted and can therefore not be stated off-hand. When the cephalin content is about 15%, in theory 3%, in practice between about 10 and 70% of methyl chloride and about 3-6% potassium carbonate or equivalent amounts of other bases, calculated on the weight of the phosphatide mixture, are added and optionally 10-500% ethanol can be used for liquefaction.

The temperature at which the conversion is preferably carried out is between 40 and 80°C. Higher temperatures can be applied as far the equipment allows, but these are not necessary. At lower temperatures the reaction rate is rather low.

Generally the reaction is continued until the pressure does not change substantially any more. Mostly periods of 7-100 hours are to be observed, as methyl chloride generally provides a slower reaction than the other methylating agents mentioned.

During the analysis of the reaction product, the predicted intermediate products (mono and dimethyl cephalin) could not be identified. It is believed that, presumably because of their stronger basicity, these intermediate products are methylated more quickly than the cephalin itself. After cooling of the autoclave and letting off the pressure, the reaction product can be

removed from it by pouring. Besides the quaternized products it contains the substances which have optionally been present from the start, such as inositol phosphatides, glycerides, sugar, etc., and the added compounds, such as base and solvent, and the inorganic chloride formed. The base can be neutralized, preferably with hydrochloric acid, and water and solvent can be removed by drying and/or heating. If desired, the inorganic chloride can be removed by washing with water or by dissolving the reaction product in ethanol-petroleum ether mixtures and filtering the precipitated salt off. The dried product can be subjected to further treatment, e.g. de-fatting with acetone or methyl acetate and/or de-sugaring, or the lecithin content can be further increased by other processes.

In the above conditions the serine cephalin, which is often present in larger quantities in animal phosphatide mixtures, can also be quaternized. The amide nitrogen in N-acyl cephalin and sphingomyelin is generally not affected.

The invention is further illustrated by the following Examples using soy-bean phosphatides as starting material. However, the invention is not restricted to phosphatides of this origin.

Example 1

11.3 g of a de-sugared, ethanol-soluble soy-bean phosphatide fraction, 49 g of ethanol (96%) denatured with methanol and 3.2 g of a 10% aqueous sodium hydroxide solution (2.8% NaOH of the phosphatide mixture added) were introduced into a stirred autoclave (125 ml). The autoclave was connected with a bottle of methyl chloride (3 $kg/cm^2$) at room temperature. After an hour the valve was closed and the temperature was raised to 50°C, the initial pressure being 5.0 $kg/cm^2$. The

mixture was then stirred for 8 hours; the final pressure was 4.7 $kg/cm^2$. After cooling to room temperature, the pressure was reduced very carefully to avoid overfoaming of the reaction mixture. The pH-value of the mixture had fallen from 10 to 6. The mixture was concentrated and dried in vacuo. A product was obtained in an amount of 10.2 g, which was dissolved in 20 ml petroleum ether and purified over 20 g silica gel. After washing with 100 ml petroleum ether, concentrating and drying, 5.3 g fat-free end-product was obtained.

Analysis

| | % |
|---|---|
| Phosphatidyl choline (PC) | 69.8 |
| Lysophosphatidyl choline | 6.4 |
| Phosphatidyl oxyethylamine (PE) | 1.9 |
| | |
| PC/PE | 37 |

The PC:PE ratio in the starting material was 5.

Example 2

As in Example 1, 70 g of the same starting material, 8 g ethanol and 12.2 g of a 30% potassium carbonate solution (5.2% $K_2CO_3$ of the phosphatide mixture) were converted with 50 g methyl chloride, during which the mixture was stirred for 18 hours. The final pH-value was 7.5. When the reaction mixture was rinsed with ethanol, some KCl was precipitated, which was filtered off. The dried product was defatted by washing with acetone (1x) and methyl ethanoate (3x) at 4°C.

Analysis

| | % |
|---|---|
| Phosphatidyl choline | 68.0 |
| Lysophosphatidyl choline | 7.0 |
| Phosphatidyl oxyethylamine | 1.0 |
| P | 3.53 |
| PC/PE | 68 |

Example 3

As in Example 1, 74 g of an alcohol soluble soy-bean phosphatide fraction, 7.5 g ethanol and 13.3 g of a 30% potassium carbonate solution (5.4% $K_2CO_3$ calculated on the amount of phosphatide) were converted with 50-60 g methyl chloride, during which the mixture was stirred for 7 hours. The pH of the mixture fell from 9 to 7. After distribution over a mixture of 1 part of ethanol and 2 parts of petroleum ether and water and defatting with acetone and methyl ethanoate, 33 g end-product was obtained.

Analysis

| | % |
|---|---|
| Phosphatidyl choline | 61.2 |
| Lysophosphatidyl choline | 2.9 |
| Phosphatidyl oxyethylamine | 0.6 |
| P | 3.0 |
| PC/PE | 102 |

The PC:PE ratio in the starting material was 4-5.

Example 4

62 g native soy-bean phosphatide, 12.5 g ethanol and 10.2 g 25% potassium hydroxide solution (4.1% KOH per amount of phosphatide added) were converted with methyl chloride as described in Example 1. The mixture was stirred for 10 hours. The pH-value of the mixture fell

from 11 to 6. Yield after drying : 52 g (loss because of foaming).

Analysis

| | Final product % | Starting product % |
|---|---|---|
| Phosphatidyl choline | 27.2 | 15 |
| Phosphatidyl oxyethylamine | 3.1 | 12-13 |

Example 5

60 g native soy-bean phosphatide, 10 g ethanol and 10.3 g 30% potassium carbonate solution (5.2% $K_2CO_3$ calculated on the amount of phosphatide) were converted with methyl chloride as described in Example 1. The mixture was stirred for 10 hours. The pH-value of the mixture fell from 9.5 to 7.5. In the thin-layer-chromatogram the PE-spot was very weak; the PC-spot on the contrary was stronger as compared with the starting material.

Example 6

10 kg native soy-bean phosphatide was stirred with 1.7 kg ethanol and poured into a 25 l autoclave; 0.65 kg potassium carbonate dissolved in 1.3 kg water was added and the autoclave was closed.

4.5 kg methyl chloride was added through a pressure pipe. The mixture was heated to 45°C and stirred for 20 hours at 800 r.p.m. After cooling to room temperature the excess pressure was removed carefully. The product was poured on to a plate and dried at 40°C and 0.025 $kg/cm^2$. Yield : 9.2 kg.

Analysis

| | Final product % | Starting product % |
|---|---|---|
| Phosphatidyl choline | 29.7 | 14.1 |
| Lysophosphatidyl choline | 1.2 | |
| Phosphatidyl oxyethylamine | 2.0 | 13.2 |
| Phosphatidyl inositol | 7.9 | |
| Phosphatidic acid | 6.1 | |
| P | 2.26 | 2.08 |
| PC/PE | 14.9 | 1.1 |

Example 7

12.6 mg nearly pure phosphatidyl oxyethylamine (95%) was dissolved in 1 ml of a mixture of 2 parts of chloroform and 1 part of methanol. The solution was placed in a small tube and 7.4 mg potassium carbonate dissolved in 0.1 ml water and about 0.2 g methyl chloride were added while cooling. The tube was sealed and then agitated for 24 hours at 45°C.

The reaction product was analysed by means of thin layer chromatography (two different carriers). Only one PC-spot could be observed. Thus PE was completely converted into PC.

Example 8

18.6 mg N,N-dimethyl-2,3-dioctadecanoyl-1-glyceryl phosphoryl-L-oxyethylamine was dissolved in 1 ml of a mixture of 2 parts of chloroform and 1 part of methanol. The solution was placed in a small tube and 3.4 mg potassium carbonate, dissolved in 0.05 ml water, and about 0.2 g methyl chloride were added while cooling. The tube was sealed and then agitated for 24 hours at 45°C.

The reaction product was analysed by thin-layer-chromatography (two different carriers). Only one PC-spot could be observed. Thus the dimethyl-PE was completely converted into PC.

## CLAIMS

1. Process for the preparation of quaternized phosphatidyl oxyethylamine and N-derivatives thereof with methyl halogenide as methylating agent, characterized in that phosphatidyloxyethylamine and/or an N-derivative thereof is converted with methyl chloride in the presence of a base.

2. Process according to Claim 1, characterized in that sodium carbonate and/or potassium carbonate is used as base.

3. Process according to Claim 1 or 2, characterized in that the reaction is carried out in the presence of a solvent.

4. Process according to Claim 3, characterized in that as solvent ethanol is used.

5. Process according to any one of Claims 1-4, characterized in that the reaction is carried out in a closed vessel, at a temperature of 40-80°C.

6. Phosphatidyl choline and N-derivatives thereof prepared according to the process of any of Claims 1-5.

European Patent Office

# EUROPEAN SEARCH REPORT

0122676

Application number

EP 84 20 0511

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | FR-A-2 186 476 (A. NATTERMANN & CIE.)<br>* Claims *<br>--- | 1-6 | C 07 F 9/10 |
| A | DE-A-2 753 894 (A. NATTERMANN & CIE)<br>* Claims *<br>--- | 1-6 | |
| A | EP-A-0 002 202 (MAX-PLANCK-GESELLSCHAFT ZUR FÖRDERUNG DER WISSENSCHAFTEN E.V.)<br>* Page 11, example 3; claims *<br>----- | 1-6 | |
| | | | TECHNICAL FIELDS SEARCHED (Int. Cl. ³) |
| | | | C 07 F 9/00 |

The present search report has been drawn up for all claims

| Place of search | Date of completion of the search | Examiner |
|---|---|---|
| THE HAGUE | 20-07-1984 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82